# EUROPEAN PATENT APPLICATION

(11) **EP 4 737 852 A1**
(43) Date of publication of application: **06.05.2026**
(21) Application number: 24175812.7
(22) Date of filing: 14.05.2024
(51) Int. Cl.: G01C 21/00, G01C 21/34, G05D 1/86

(54) **MODEL MONITORING FOR MACHINE LEARNING-BASED MAPPING SYSTEMS**

(71) Applicant: Rovco Limited, Bristol BS1 6BX (GB)
(72) Inventor: MAYNARD, Magnus, Bristol, BS1 6BX (GB); SEALE, Cate, Bristol, BS1 6BX (GB); STEFFENS, Aljoscha, Bristol, BS1 6BX (GB)

(57) **Abstract**

A system for monitoring performance of predictive models within robotic mapping systems. A prediction unit is communicatively coupled to one or more sensors configured to obtain measurements of an environment. The prediction unit comprises a predictive model operable to generate one or more features from a signal obtained from the one or more sensors. A mapping unit is configured to construct a map of the environment based at least in part on data derived from the signal and/or the one or more features. A monitoring unit is configured to determine a performance value associated with the one or more features generated by the predictive model, where the performance value quantifies a performance metric for the predictive model, compare the performance value to a performance criterion, and when the performance value does not satisfy the performance criterion, cause execution of an action to adjust operation of the mapping unit.

## Description

### Field of Disclosure

The present disclosure relates to environment mapping systems using machine learning models. Particularly, but not exclusively, the present disclosure relates to monitoring the performance of machine learning models used within environmental mapping systems; more particularly, but not exclusively, the present disclosure relates to adapting operation of environmental mapping systems based on the performance of machine learning models used within such systems.

### Background

In the field of robotics, it is often necessary to build a map of the robot's environment. There are many techniques for constructing such environmental maps, such as Simultaneous Localization and Mapping (SLAM). Recently, machine learning has proven to be an effective way to enhance these techniques, either in part or as the entire end-to-end mapping process. However, the robustness of these machine learning-based mapping systems relies on the machine learning model performing correctly, otherwise an inaccurate map may be generated and unpredictable behaviours may occur. The accuracy and robustness of mapping systems is of particular importance within harsh environments such as subsea or space environments.

As such, there is a need to improve the integration of machine learning models within environmental mapping systems.

### Summary of Disclosure

According to an aspect of the present disclosure there is provided a system for monitoring performance of predictive models within robotic mapping systems. The system comprises a prediction unit communicatively coupled to one or more sensors configured to obtain measurements of an environment, the prediction unit comprising a first predictive model operable to generate one or more features from a signal obtained from the one or more sensors. The system further comprises a mapping unit configured to construct a map of the environment based at least in part on data derived from the signal obtained from the one or more sensors and/or the one or more features obtained from the first predictive model. The system further comprises a monitoring unit comprising one or more processors configured to determine a performance value associated with the one or more features generated by the first predictive model, wherein the performance value quantifies a performance metric for the first predictive model. The one or more processors are further configured to compare the performance value to a performance criterion, and when the performance value does not satisfy the performance criterion, cause execution of an action to adjust operation of the mapping unit.

Adjusting the operation of the mapping unit based on the performance of the first predictive model has numerous benefits and advantages. First, it helps to improve the reliability and robustness of the mapping system by helping to ensure that the mapping system does not use sub-optimal or poor quality features/predictions generated by the first predictive model. This helps to improve the accuracy of the generated map by avoiding the degradation in performance that may occur from unreliable features or predictions. Furthermore, the actions performed in response to a drop in performance can be executed quickly without necessarily requiring the predictive model to be re-trained (which can be both computationally expensive and time consuming). These benefits help improve the effectiveness of the mapping unit in generating an accurate environment map which is particularly beneficial within harsh environments (e.g., subsea environments).

The performance metric can be an outlier detector, a novelty detector, or a data similarity metric. The one or more processors of the monitoring unit can be configured to determine the performance value for the data similarity metric by calculating a distance between: (i) one or more embeddings generated based on the signal obtained from the one or more sensors, and (ii) at least one predetermined embedding. The at least one predetermined embedding can be generated during training of the predictive model. The distance can be calculated using a distance metric. The distance metric is one of: a Euclidean distance measure, a cosine distance measure, a Manhattan distance, a dot product distance measure, or any other suitable distance metric. The distance can be weighted according to at least one training performance score related to the at least one predetermined embedding. The distance can be an average distance between the one or more embeddings and a plurality of predetermined embeddings.

Beneficially, monitoring similarity (e.g., data similarity, concept drift, etc.) allows the mapping system to be more robust in unseen condition by automatically re-configuring the mapping system to expect unreliable (i.e., out of distribution) outputs. This is particularly advantageous when the predictive model has not learned an adequate representation of the environment as it helps to avoid the mapping unit relying on inaccurate features or predictions which could degrade system performance and the accuracy of the generated map.

The performance metric can be a confidence metric. The confidence metric allows the mapping unit to integrate a degree of confidence in the outputs generated by the prediction unit into the generation of the map.

Advantageously, the use of a confidence metric allows for the generation of a probabilistic map and allows for the determination of a hierarchy for overwriting elements of the map (e.g., with a low confidence score).

The performance metric can be an operational performance metric associated with a resource usage of the system. The resource usage can correspond to one or more of: a graphics processing unit, GPU, usage; a central processing unit, CPU, usage; a memory usage; a bandwidth; a model throughput metric; or a frames per second, FPS, metric. The resource usage can be a resource usage of the first predictive model.

Beneficially, this allows the system to detect operational performance issues, where insufficient resources are available due to high processor (e.g., GPU) or memory utilisation. This allows the system to fallback automatically to a more reliable behaviour by identifying when the system is operating in a suboptimal environment and thus producing potentially unreliable results.

The performance criterion can correspond to a threshold value.

The system can be communicatively coupled to a robotic platform. The system can comprise the robotic platform and the robotic platform can comprise the mapping unit and the one or more sensors. Execution of the action to adjust operation of the mapping unit can cause an adjustment to a speed, a position, an orientation, a path, a movement direction, and/or a depth of the robotic platform. Additionally, or alternatively, execution of the action to adjust operation of the mapping unit can cause the robotic platform to adjust behaviour and/or operation. For example, acquiring data using one or more different sensors, configuring one or more existing sensors (such as adjusting the white balance on a camera), and the like.

Execution of the action to adjust operation of the mapping unit can cause the mapping unit to bypass the first predictive model such that a subsequent map of the environment is generated based on signals obtained from the one or more sensors.

Execution of the action to adjust operation of the mapping unit can cause the mapping unit to obtain features from a second predictive model of the prediction unit such that a subsequent map of the environment is generated based at least in part on features from the second predictive model.

Advantageously, this allows for the deployment of more niche predictive models. For example, the first predictive model can be a predictive model trained for a specific environment. When performance of that model is deemed not to meet the threshold performance criterion, then it can be swapped for a second, more general model. Therefore, the benefits of the niche predictive model can be obtained whilst providing a fallback to a more general, widely tested, model. Similarly, this allows for the deployment of larger, more accurate, models when a drop in predictive performance is detected. Indeed, a cascade of models can be implemented in this manner such that when the performance of the current model drops, the next model in the cascade of models is deployed.

Execution of the action to adjust operation of the mapping unit can cause display of an alert viewable by a user of the system.

Beneficially, this allows a user to adjust behaviour for improved mapping/navigation based on an understanding of the performance of the first predictive model. Without this, the user would be unaware as to why the performance of the mapping system is degrading. Therefore, the present disclosures provides improved explainability and increased information regarding the hidden state of the system.

Execution of the action to adjust operation of the mapping unit can cause the mapping unit to regenerate the map of the environment based on the signal obtained from the one or more sensors.

The signal obtained from the one or more sensors can include: an RGB image, and RGBD image, a SONAR image, a SONAR point cloud, a LIDAR point cloud, an inertial measurement signal, a GPS signal, or a doppler velocity log signal.

The first predictive model can be implemented using various machine learning approaches, including deep learning techniques like convolutional neural networks or transformer-based models, as well as traditional statistical methods, for instance, linear regression.

The mapping unit can be configured to use a simultaneous localization and mapping algorithm to generate the map of the environment.

According to a further aspect of the present disclosure there is provided a method for adaptive operation of a mapping unit configured to construct a map of an environment based at least in part on features obtained from a predictive model. The method comprises identifying, by one or more processors, one or more features generated by the predictive model, determining, by the one or more processors, a performance value associated with the one or more features generated by the predictive model, wherein the performance value quantifies a performance metric for the predictive model, comparing, by the one or more processors, the performance value to a performance criterion, and, when the performance value does not satisfy the performance criterion, causing, by the one or more processors, execution of an action to adjust operation of the mapping unit.

According to an additional aspect of the present disclosure there is provided a computer-readable medium comprising instructions which, when executed by one or more processors, cause the one or more processors to identify one or more features generated by the predictive model, determine a performance value associated with the one or more features generated by the predictive model, wherein the performance value quantifies a performance metric for the predictive model, compare the performance value to a performance criterion, and, when the performance value does not satisfy the performance criterion, cause execution of an action to adjust operation of the mapping unit.

According to another aspect of the present disclosure there is provided a robotic mapping system comprising one or more processors configured to identify one or more features generated by the predictive model, determine a performance value based on the one or more features generated by the predictive model, wherein the performance value quantifies a performance metric associated with the predictive model, compare the performance value to a performance criterion, and, when the performance value does not satisfy the performance criterion, cause execution of an action to adjust operation of the mapping unit.

Further aspects and embodiments of the present disclosure are set out in the appended claims.

Advantages will become more apparent to those of ordinary skill in the art from the following description of the preferred embodiments which have been shown and described by way of illustration. As will be realized, the present embodiments may be capable of other and different embodiments, and their details are capable of modification in various respects. Accordingly, the drawings and description are to be regarded as illustrative in nature and not as restrictive.

### Brief Description of Drawings

Embodiments of the present disclosure will now be described, by way of example only, and with reference to the accompanying drawings, in which:
Figure 1 shows a system for mapping an environment according to an embodiment of the present disclosure;
Figure 2 shows a method according to an aspect of the present disclosure;
Figure 3 shows a system according to an embodiment of the present disclosure; and
Figure 4 shows an exemplary computing environment.

### Detailed Description

By way of a non-limiting overview, embodiments of the invention relate to monitoring machine learning models used as part of environment mapping processes suitable for harsh environment systems (e.g., subsea robotic mapping systems). The functional and/or operational performance of the machine learning model is monitored and used to adjust operation of the map generation process thereby providing a mapping system that is more robust and reliable than known machine learning-based environmental mapping systems.

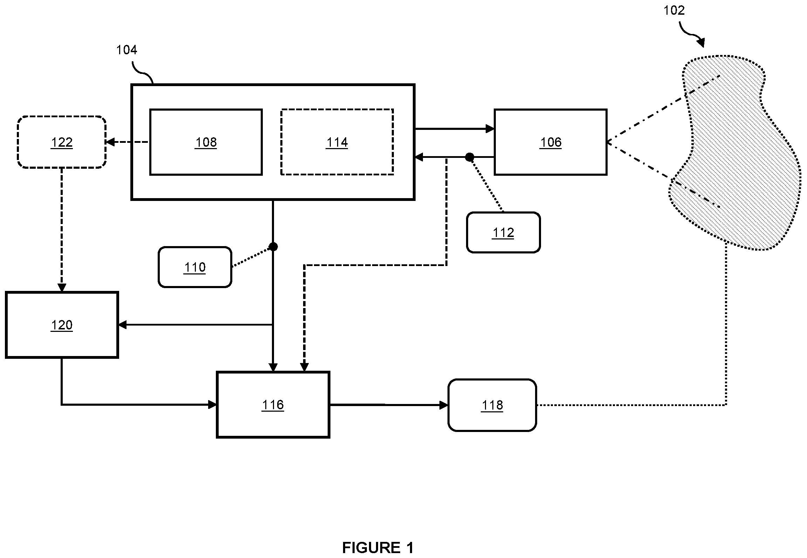

Figure 1 shows a system for mapping an environment 102. The system can form a part of a robotic mapping system such as a subsea robotic mapping system.

The system comprises a prediction unit 104 communicatively coupled to a sensor assembly 106 which comprises one or more sensors configured to obtain measurements of the environment 102 (e.g., a subsea environment). The prediction unit 104 comprises a first predictive model 108 operable to generate one or more features 110 from a signal 112 obtained from the one or more sensors. The prediction unit 104 optionally comprises a second predictive model 114. A mapping unit 116 is configured to construct a map 118 of the environment 102, or a portion thereof, based at least in part on data derived from the signal 112 and/or the one or more features 110 obtained from the first predictive model 108. A monitoring unit 120 is configured to monitor the performance of the prediction unit 104 and adjust operation of the mapping unit 116 based on the monitored performance. In one embodiment, the monitoring unit 120 monitors the performance of the prediction unit 104 using a database of embeddings 122.

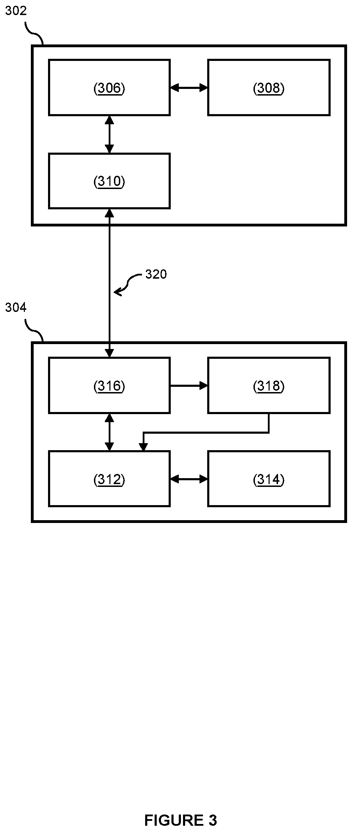

As described in more detail below in relation to Figure 3, the system shown in Figure 1 can form part of a mapping, or surveying, system for use in harsh environments, such as continuous use underwater beyond two metres, subsea, or in the vacuum of space, and can comprise a Remotely Operated Vehicle (ROV), Autonomous Underwater Vehicle (AUV), robotic platform or the like. As such, some or all of the components of the system can be contained within a protective casing, or distributed amongst one or more protective casings, to shield the components from a harsh environment such as subsea. The casing(s) can for example each comprise a pressure vessel.

According to an aspect of the present disclosure, the monitoring unit 120 determines a performance value associated with the one or more features 110 generated by the first predictive model 108. As discussed in more detail below, the performance value quantifies a performance metric for the first predictive model 108. For example, the performance value can be based on the one or more features 110 generated by the first predictive model 108 and so quantify a data similarity or confidence score associated with the one or more features 110. Here, a performance value associated with the one or more features 110 is a performance value which is used to quantify the performance of the first predictive model 108 in terms of the ability of the first predictive model 108 to generate accurate, usable, and suitable features in an efficient manner. The monitoring unit 120 compares the performance value to a performance criterion and, when the performance value does not satisfy the performance criterion, the monitoring unit 120 causes execution of an action to adjust operation of the mapping unit 116. Advantageously, this allows the system to adapt its operation/behaviour to account for changes in performance of the first predictive model 108 thereby helping to improve the reliability, robustness, and safety of the system.

The sensor assembly 106 comprises one or more sensors configured to generate measurements, readings, or the like from the environment 102. The sensor assembly 106 can include a camera system (either a single camera system or a stereo camera system) comprising one or more sensors arranged to capture images of the environment 102. The one or more sensors can include a sensor for detecting visible or near-infrared light and generating a Red-Green-Blue (RGB) image of the environment 102. In such a setting, the signal 112 includes an RGB image of a portion of the environment 102. The one or more sensors can include a depth sensor for generating a 3-dimensional representation (e.g., a point cloud) of the environment 102. In such a setting, the signal 112 includes a 3-dimensional point cloud of a portion of the environment 102. For example, an RGBD image. The depth sensor can utilise any suitable method such as an RGBD camera, stereo/depth cameras, LiDAR, or Time-of-Flight (ToF). The one or more sensors can include a SONAR sensor (e.g., a forward looking sonar, a multibeam echo sounder, or a side-scan sonar) configured to convert echoes received from transmitted sound pulses into an image or point cloud of the environment 102. In such a setting, the signal 112 includes a sonar image or point cloud of a portion of the environment 102. The one or more sensors can include an inertial measurement unit (IMU) configured to generate an inertial measurement signal, a global positioning system (GPS) unit configured to generate a GPS signal, and/or a doppler velocity log DVL unit configured to generate a DVL signal.

The first predictive model 108 is a deep learning model such as a convolutional neural network (CNN), a transformer based model, a mamba model, or the like. Alternatively, the first predictive model 108 is a statistical model such as a linear regression model. More generally, the first predictive model 108 can be any suitable model which transforms, modifies, classifies, or otherwise utilises data obtained from the sensor assembly 106 (e.g., the signal 112) to generate features, predictions, or any other representation, usable by the mapping unit 116 (e.g., the one or more features 110). For example, a segmentation model can be used to generate a segmentation map of an image generated by the sensor assembly 106. The segmentation map can then be used to guide the feature extraction and processing of the mapping unit 116.

The mapping unit 116 generates the map 118 of the environment 102, or at least a portion thereof, based at least in part on data derived from the signal 112 and/or the one or more features 110 generated by the prediction unit 104. Here, data derived from the signal 112 can include the signal 112 and/or data or features extracted from the signal 112 (e.g., by other processes or algorithms not shown in Figure 1). Data derived from the one or more features 110 can include the one or more features 110 generated by the prediction unit 104, data or features extracted from the one or more features 110, and/or transformations of the one or more features 110. The mapping unit 116 can utilise any suitable algorithm(s) to generate the map 118 from the signal 112, the one or more features 110, and/or other signals obtained from the sensor assembly 106 or other processes or components of the system. In one embodiment, the mapping unit 116 uses a simultaneous localization and mapping (SLAM) algorithm to generate the map 118 of the environment 102. As is known, SLAM continuously integrates data (features generated by the prediction unit 104 and/or raw sensor measurements obtained from the sensor assembly 106) to build a representation of the environment 102. The map 118 can be a grid map, a point cloud, a feature-based map, or any other suitable form. The map 118 can then be utilised for various downstream tasks such as autonomous or semi-autonomous navigation, path planning, and the like.

The default operation of the mapping unit 116 is to use the one or more features 110 generated by the first predictive model 108 as part of the generation of the map 118. However, in certain circumstances it may be beneficial to override this default behaviour to improve the accuracy of the map and to avoid errors. As such, the operation of the mapping unit 116 is adjustable by executing an action to override the default behaviour either permanently or for a period of time (e.g., for the next 10 seconds, 30 seconds, 1 minute, 5 minutes, etc., or until a further action is executed to restore the default behaviour). As described in more detail below, such actions are executed when the performance of the first predictive model 108 does not satisfy a performance criterion. By executing an action to cause the mapping unit 116 to change behaviour, the system can adapt to changes in performance of the first predictive model 108 (e.g., due to changes in the environment) and help maintain the robustness and stability of the map 118 generated by the mapping unit 116.

As described below, various actions can be executed to trigger different behavioural changes in the mapping unit 116.

Execution of the action can cause the mapping unit 116 to regenerate the map 118 of the environment based on the signal 112 obtained from the one or more sensors of the sensor assembly 106. That is, the mapping unit 116 is instructed to ignore the one or more features 110 generated by the first predictive model 108 and instead (re)generate the map 118 using the raw sensor data contained within the signal 112. For example, if the first predictive model 108 is an image segmentation model used to guide feature extraction for the mapping unit 116, then execution of the action causes the mapping unit 116 to use the whole image instead of the segmentation(s) generated by the first predictive model 108. This helps to improve the reliability and robustness of the mapping system by helping to ensure that the mapping system does not use sub-optimal or poor quality features/predictions generated by the first predictive model 108.

Execution of the action can cause the mapping unit 116 to weight the one or more features 110 used to generate the map 118. For example, when the mapping unit 116 utilises both the one or more features 110 and the signal 112 to generate the map 118, a lower weighting can be applied to the one or more features 110 than the weighting applied to the signal 112. Consequently, the signal 112 provides a greater contribution to the generation of the map 118 than the one or more features 110. The weighting can be a predefined fixed value (e.g., a weighting of *α* is applied to the one or more features 110 and a weighting of (1 - *α*) is applied to the signal 112, where *α* < 0.5) or the weighting can be based on a confidence value or score associated with the one or more features 110.

Execution of the action can cause the mapping unit 116 to obtain features from the second predictive model 114 of the prediction unit 104 (i.e., in place of the one or more features 110 generated by the first predictive model 108). In this way, a subsequent map of the environment is generated based at least in part on features generated by the second predictive model 114. Amongst other benefits, this allows for the deployment of more niche, or focussed, predictive models. For example, the first predictive model can be a predictive model trained for a specific environment (e.g., subsea). When performance of that model is deemed not to meet the threshold performance criterion, then it can be swapped for a second, more general model trained across a wider range of environments. Therefore, the benefits of the niche predictive model can be obtained whilst providing a fallback to a more general, widely test, model.

Execution of the action can cause the mapping unit 116 to display an alert viewable by a user of the system. The alert may be an alert or notification which is displayed on a device of the user. For example, when the mapping unit 116 is deployed on a robotic platform operating in semi-autonomous or manual mode, the alert can be presented to a pilot of the robotic platform to inform them that the first predictive model 108 is not generating outputs which satisfy the performance criterion. The pilot may then take corrective action to account for this drop in performance. This allows the pilot to adjust behaviour for improved mapping/navigation based on an understanding of the performance of the first predictive model. Without this, the pilot or any other user would be unaware as to why the performance of the mapping system is degrading.

Execution of the action can cause the mapping unit 116 to instruct a robotic platform to reduce its speed. That is, the robotic platform is caused to move at a slower speed which is less than a current speed of the robotic platform. The robotic platform comprises the one or more sensors from which the signal 112 is obtained and so causing the robotic platform to slow down helps to reduce the load on the first predictive model 108 at processing new sensor data. Additionally, or alternatively, execution of the action can cause the mapping unit 116 to instruct a robotic platform to change direction (i.e., causes an adjustment to a movement direction of the robotic platform) and/or change depth (i.e., causes an adjustment to a depth of the robotic platform).

All the above described changes to the default operation of the mapping unit 116 occur as a result of the monitoring unit 120 determining that the prediction unit 104 is not performing to a required standard (i.e., the generated output(s) do not satisfy a predetermined criterion). As such, the monitoring unit 120 monitors the performance of the prediction unit 104 and adjusts operation of the mapping unit 116 to account for changes in performance (using the different actions/behaviours described above). For example, if the monitoring unit 120 identifies that the prediction unit 104 is unable to generate accurate or usable features from the sensor data, then a command can be sent to the mapping unit 116 to account for this when generating the map 118 of the environment 102 (using one or more of the approaches described above). The monitoring unit 120 therefore helps to improve the accuracy and behavioural consistency of the mapping unit 116 by reducing the likelihood that the prediction unit 104 introduces errors or noise into the map generation process. This is particularly advantageous in safety critical scenarios where the map 118 generated by the mapping unit 116 is used as part of an autonomous or semi-autonomous navigation system. The monitoring unit 120 therefore helps to improve the safety and operation of the system and/or any vessel or robotic platform which integrates the system.

In one embodiment, the monitoring unit 120 is a remote unit or service which is communicatively coupled to the other units within the system via a communication channel (e.g., a local area network connection, a WiFi connection, or the like). As such, the monitoring unit 120 can be a cloud service which performs remote monitoring of the performance of the prediction unit 104 and can provide instructions or commands to cause a change in operation of the system based on the performance.

To monitor performance, the monitoring unit 120 calculates a performance value for the prediction unit 104 (i.e., the first predictive model 108 and/or the second predictive model 114). The performance value is a quantitative representation, or value, of a performance metric. The performance value therefore provides a measure of the ability of the prediction unit 104 to generate usable features at a given time point. The performance value can be based on features generated from the signal 112 (e.g., the one or more features 110 or features generated by other models or processes within the system). If the performance value does not satisfy a predefined criterion, then operation of the mapping unit 116 is adjusted accordingly. Various performance metrics can be used to measure the performance of the prediction unit 104 and may be generally grouped into functional metrics and operational metrics. Functional metrics measure the functional performance of a predictive model in terms of the inputs or outputs generated by the predictive model (e.g., inputs, embeddings, features, or predictions). Operational metrics measure the system and/or computational resources used by a predictive model.

An example functional metric used by the monitoring unit 120 is the data similarity metric. Using the data similarity metric, the performance value determined by the monitoring unit 120 is a data similarity value. The data similarity value indicates a degree of similarity between data generated by the first predictive model 108 and a target data point, a target data set, or target distribution. For example, the data similarity value can quantify the degree to which data generated by the first predictive model 108 is similar to the data used to train the first predictive model 108. Additionally, or alternatively, the data similarity value indicates a degree of similarity between data associated with the first predictive model 108 (e.g., inputs to the model, embeddings, etc.) and a target data point, a target data set, or target distribution. The data similarity value can be determined by calculating distances between embeddings, which are high-level numerical representations of input data.

In general, an embedding associated with a signal (e.g., the signal 112) is a representation of the signal at a lower dimensionality (but higher level of abstraction) than the dimensionality of the signal. For example, an embedding can be generated from the output of an intermediate layer of a deep neural network (which may be the first predictive model 108). As such, an embedding may be generated by the first predictive model 108. Additionally, or alternatively, an embedding can be generated by another algorithm or process which may form a part of the monitoring unit 120 (e.g., a separate neural network, dimensionality reduction algorithm, manifold learning algorithm, or any other suitable approach).

The data similarity value can be determined by calculating a distance between: (i) one or more embeddings generated based on the signal 112 obtained from the one or more sensors, and (ii) at least one predetermined embedding (or target embedding). In one embodiment, at least one of the one or more embeddings is generated by the first predictive model 108 based on the signal 112. The distance is calculated using any suitable distance metric such as a Euclidean distance measure, a cosine distance measure, or a dot product distance measure. In general, the higher the distance between two embeddings, the greater the degree of similarity. Alternatively, the data similarity value is an average distance (e.g., the mean distance, median distance, etc.) calculated between the one or more embeddings and a plurality predetermined, or target, embeddings.

The predetermined embedding is obtained from the database of embeddings 122. The database of embeddings 122 can be generated during training of the first predictive model 108 and/or generated on the training data used to train the first predictive model 108. As such, the database of embeddings 122 may contain data indicative of the training performance of the first predictive model 108. In implementations where multiple predictive models are employed, multiple embedding databases can be used (one for each of the predictive models employed).

The database of embeddings 122 can also include scores for each embedding. A score is associated with an embedding and indicates the performance of the first predictive model 108 with respect to the training instance associated with the embedding. A higher score indicates a higher predictive performance or accuracy. Example metrics used for training performance scores include classification accuracy, area under the curve (AUC), F-score, and the like. The training performance scores can be used to weight the corresponding distances so that embeddings for which the first predictive model 108 performed well during training are preferentially weighted when considering the performance of the first predictive model 108.

When utilising the data similarity value as a functional metric , the monitoring unit 120 utilises a data similarity performance criterion to determine whether operation of the mapping unit 116 should be adjusted. The data similarity performance criterion is threshold-based such that the criterion is satisfied when the data similarity value (e.g., the distance between the one or more embeddings and a predetermined embedding as described above) is below a threshold value and the criterion is not satisfied when the data similarity value is above the threshold value. In this way, the mapping unit 116 is caused to adjust operation when the first predictive model 108 is identified as generating out of distribution predictions or features. The threshold value can be determined empirically by performing experimentation using test data sets (e.g., using a method such as Otsu's thresholding approach to determine a threshold value that maximises variance between two sets). Alternatively, the threshold value can be determined from metrics obtained during operation of a robotic mapping system. For example, recording the performance value associated with a time at which a pilot manually disabled machine learning based features (e.g., because they are not functioning as expected). As a further alternative, the threshold value can be determined using temporal and/or spatial inconsistencies in predictions. For example, changes in predictions at the same space or position can be monitored over time and the corresponding performance value used to determine the threshold value.

Monitoring data similarity allows the mapping system to be more robust in unseen condition by automatically re-configuring the mapping system to expect unreliable (i.e., out of distribution) outputs. This is particularly advantageous when mapping environments that the predictive model was not trained for as it helps to avoid the mapping unit 116 relying on inaccurate features or predictions which could degrade the performance and accuracy of the generated map.

In one embodiment, the data similarity metric is a data drift metric used to calculate a data drift value indicative of the degree of data drift exhibited by the first predictive model 108. The data drift value thus quantifies the degree to which data generated by the first predictive model 108 is out of distribution when compared with a target data set.

A further example functional metric used by the monitoring unit 120 is the confidence metric. The performance value for the confidence metric is referred to as a confidence score (or confidence value) and is a probability that the prediction-i.e., the one or more features 110-generated by the first predictive model 108 is correct. The confidence score is therefore a real number in the range [0,1] where a value closer to 1 indicates that the one or more features 110 have a high probability of being correct (and thus usable by the mapping unit 116). The confidence score can be generated by the first predictive model 108 as part of generating the one or more features 110. Alternatively, the confidence score is generated from confidence intervals calculated during training of the first predictive model 108.

When utilising the confidence score as a functional metric (i.e., to quantify the confidence in the predictions or features generated by the first predictive model 108), the monitoring unit 120 utilises a confidence performance criterion to determine whether operation of the mapping unit 116 should be adjusted. The confidence performance criterion is threshold-based such that the criterion is satisfied when the confidence score is above a threshold value (e.g., 0.99, 0.95, 0.9, or the like) and the criterion is not satisfied when the confidence score is below the threshold value. Alternatively, the confidence performance criterion is not satisfied when the features/prediction generated by the first predictive model 108 falls outside of confidence intervals (e.g., calculated during training of the first predictive model 108). In this way, the mapping unit 116 is caused to adjust operation when the first predictive model 108 is identified as generating predictions or features which have a low confidence in being correct.

An example operational metric used by the monitoring unit 120 is the resource usage metric. Here, resource usage refers to the computational load placed on the system (e.g., by the first predictive model 108). For example, graphics processing unit (GPU) usage, central processing unit (CPU) usage, memory usage, and bandwidth. Resource usage may also monitor aspects such as model throughput and/or a number of frames per second (FPS) that is being achieved by a model or the system as a whole. In one embodiment, the resource usage metric is limited to the resource usage of the first predictive model. The performance value for a resource usage metric (e.g., memory usage) can be a snapshot of resource usage at a given time point or an average value of resource usage over a time period (e.g., the previous 5 seconds, 10 seconds, 30 seconds, 1 minute, 2 minutes, etc.). In one embodiment, the resource usage corresponds to the usage of a graphics processing unit (GPU) by the first predictive model 108. For many machine learning models, such as convolutional neural networks and the like, the GPU is likely to be the most used computational resource. Consequently, monitoring the usage made of the GPU by the first predictive model 108 allows the monitoring unit 120 to control power consumption by circumventing the first predictive model 108 when it is making increased usage of the GPU.

When utilising resource usage as an operational metric, the monitoring unit 120 utilises a resource usage performance criterion to determine whether operation of the mapping unit 116 should be adjusted. The resource usage performance criterion is threshold-based such that the criterion is satisfied when the resource usage of the first predictive model 108 is below a threshold value and the criterion is not satisfied when the resource usage is above the threshold value. In this way, the mapping unit 116 is caused to adjust operation when the first predictive model 108 is identified as making excessive or onerous usage of system/computational resources.

For example, when the performance value indicates that the first predictive model 108 is making excessive use of the GPU (i.e., usage is above a threshold value), then a first command can be sent to the mapping unit 116 to stop using the one or more features 110 generated by the first predictive model 108 when generating the map 118 and a second command can be sent to the prediction unit 104 to stop further processing (e.g., until GPU usage falls below a predetermined level or for a predetermined length of time). The system is therefore able to detect operational performance issues, where insufficient resources are available, such as high GPU utilisation and allows the system to automatically fallback to a more reliable behaviour when the system is operating in a suboptimal environment (and thus producing potentially unreliable results).

Whilst the above description is focussed on the application of a single metric, the skilled person will appreciate that multiple metrics can be used simultaneously. For example, the monitoring unit 120 can simultaneously monitor the data similarity or drift, confidence, and GPU usage of the first predictive model 108. When at least one of the associated performance values does not satisfy a corresponding performance criterion, then an action is executed to adjust operation of the mapping unit 116 accordingly. Alternatively, the action is executed when at least two, or all, of the associated performance values do not satisfy the corresponding performance criterion. In this way, the system can account for multiple different functional and/or operational metrics and adapt the functionality of the mapping unit 116 to account for changes in the functional and/or operational performance of the first predictive model 108.

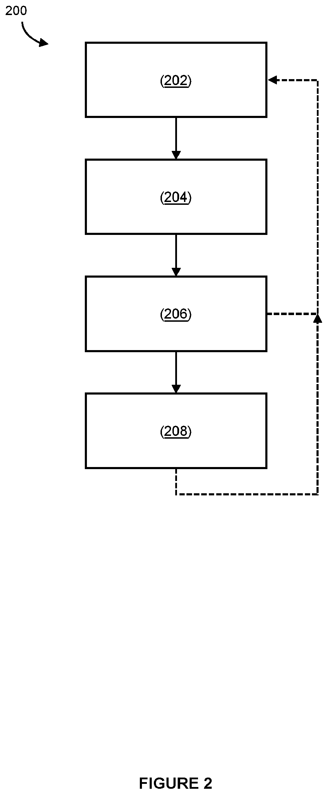

Figure 2 shows a method 200 for the adaptive operation of a mapping unit according to an aspect of the present disclosure. The mapping unit (e.g., the mapping unit 116 shown in Figure 1) is configured to construct a map of an environment based at least in part on data derived from a signal or signals obtained from one or more sensors and/or features obtained from a predictive model.

At step 202, one or more features generated by the predictive model are identified. The predictive model generates features based on input data obtained from one or more sensors arranged to obtain measurements from the environment.

For example, the first predictive model 108 shown in Figure 1 generates the one or more features 110 from the signal 112 obtained from the sensor assembly 106. The predictive model is any suitable model which can transform, modify, or otherwise utilise, sensor data to generate features, predictions, or any other representation, usable by a mapping unit to generate a map of the environment. In one embodiment, the predictive model is a deep learning model such as a convolutional neural network (CNN). In another embodiment, the predictive model is a statistical model such as a linear regression model.

At step 204, a performance value associated with the one or more features generated by the predictive model is determined. The performance value quantifies a performance metric for the predictive model.

In general, the performance value provides a number, score, or value (e.g., vector) indicative of the current performance of the predictive model. Put another way, the performance value is a measure of the ability of the predictive model to generate usable features at a given time point. As described in more detail above, the performance value is determined using a functional metric (e.g., a data drift metric or a confidence metric), or an operational metric (e.g., a resource usage metric). The performance value may be based on the one or more features generated by the predictive model (e.g., the one or more features 110 generated by the first predictive model 108 in Figure 1).

At step 206, the performance value is compared to a performance criterion.

The performance criterion defines the minimum expected performance of the predictive model (with respect to the performance metric) such that, when the predictive model does not meet this criterion, the mapping unit is adjusted, or re-configured, to account for the low performance of the predictive model. The performance criterion can be a threshold value and different criterion can be set for different performance metrics.

When the performance value does not satisfy the performance criterion-i.e., the predictive model is determined not to meet the minimum expected performance-the method 200 proceeds to step 208.

At step 208, an action to adjust operation of the mapping unit is caused to be executed.

Execution of the action results in the mapping unit adjusting behaviour to account for the change in performance of the predictive model. The behaviour of the mapping unit can be adjusted to (re)generate the map without using the one or more features generated by the predictive model (e.g., using the raw data obtained from the sensor assembly and/or features obtained from one or more other predictive models to generate the map). The behaviour of the mapping unit can be adjusted to weight the one or more features generated by the predictive model to reduce their influence on the generation of the map. The behaviour of the mapping unit can be adjusted to generate the map using features obtained from a second predictive model, different to the first predictive model. The behaviour of the mapping unit can be adjusted to display an alert or notification viewable by a user, operator, or pilot of the system or a vessel incorporating the mapping system. The behaviour of the mapping unit can be adjusted to adjust a speed, movement direction, and/or depth of the vessel or platform upon which the sensor assembly is placed or within which the mapping system is incorporated. The behaviour of the mapping unit can be adjusted to perform online retraining of the first predictive model.

After step 208, the method 200 can return to step 202, where a further set of one or more features generated by the predictive model are identified. In this way, the method 200 can be used to monitor the performance of the predictive model continuously, in real-time, whilst the mapping system is in operation.

Referring once again to operations performed after the comparison of the performance value to the performance criterion at step 206, when the performance value satisfies the performance criterion-i.e., the predictive model is determined to meet the minimum expected performance-the method 200 can return to step 202, where a further set of one or more features generated by the predictive model are identified. In this way, the performance of the predictive model can be continuously monitored, in real-time, whilst the mapping system is in operation.

In one embodiment, when the performance value satisfies the performance criterion, operation of the mapping unit is adjusted to return the mapping unit to its default behaviour (i.e., using the features generated by the predictive model to construct the map of the environment). The default behaviour of the mapping unit can be restored as soon as the performance criterion is satisfied, or a threshold period of time after the performance criterion is satisfied and remains satisfied (e.g., 10 seconds, 30 seconds, 1 minute, 2 minutes, etc.).

Figure 3 shows a system according to an embodiment of the present disclosure.

The system comprises a computing device 302 and a vessel 304. The computing device 302 can be a personal computing device or a server. The computing device 302 comprises a data processor 306 communicatively coupled to a non-volatile memory 308 and a transceiver 310. The vessel 304 comprises a data processor 312 communicatively coupled to a non-volatile memory 314 and a transceiver 316. The vessel 304 further comprises a sensor assembly 318 communicatively coupled to the data processor 312 and the transceiver 316.

The vessel 304 is configured to execute the adaptive mapping unit operation algorithm as discussed previously to generate a map of the environment surrounding the vessel 304 based on signals obtained from the sensor assembly 318 and a predictive model (e.g., a machine learning model) stored within the non-volatile memory 314 and executed by the data processor 312. Alternatively, the predictive model is stored within the non-volatile memory 308 of the computing device 302 and is executed by the data processor 306 of the computing device 302. In such implementations, the transceiver 316 transmits a signal obtained from the sensor assembly 318 to the transceiver 310 of the computing device 302. The transceiver 310 of the computing device 302 subsequently transmits features/predictions generated by the predictive model to the transceiver 316 of the vessel 304 for monitoring. Alternatively, the computing device 302 is configured to perform the monitoring operations described above (e.g., in relation to the monitoring unit 120 of Figure 1) such that the transceiver 310 transmits a command to adjust operation of the mapping unit executed at the vessel 304.

The transceivers 310, 316 define a bidirectional data link 320 between the computing device 302 and the vessel 304. The bidirectional data link 320 can be via satellite, Internet, telephone system, or the like.

The vessel 304 can comprise a remotely operable or autonomous mobile platform such as an underwater remotely operable vehicle (ROV), an autonomous underwater vehicle (AUV), an unmanned air vehicle (UAV), an unmanned ground vehicle (UGV), an unmanned underwater vehicle (UUV), or an unmanned surface vehicle (USV).

In one example, the vessel 304 can comprise a subsea remotely operable or autonomous vehicle including a propulsion system, a steering system and a command controller arranged to control the propulsion system and the steering system in accordance with command signals provided from a control station which is remote with respect to the vehicle.

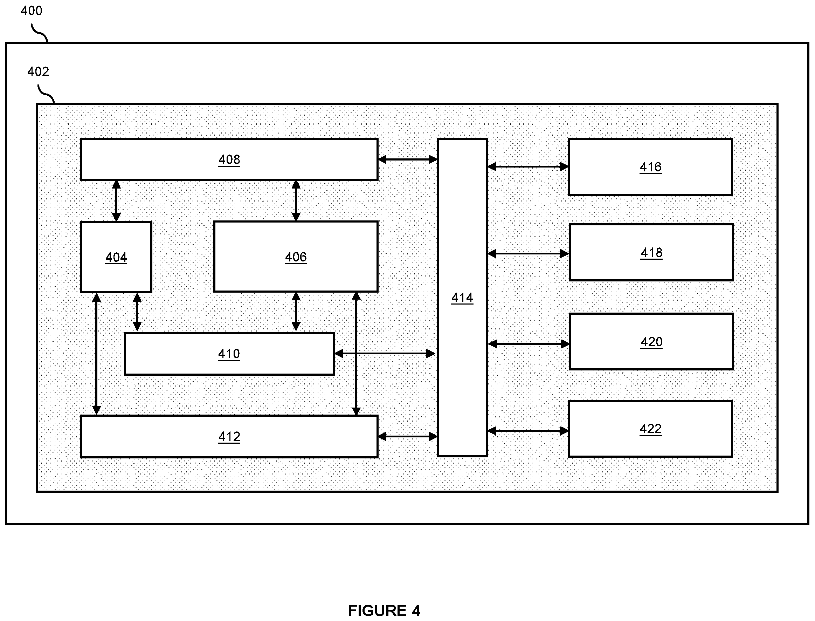

Figure 4 shows an example computing system for carrying out the methods of the present disclosure. Specifically, Figure 4 shows a block diagram of an embodiment of a computing system according to example embodiments of the present disclosure.

Computing system 400 can be configured to perform any of the operations disclosed herein such as, for example, any of the operations discussed with reference to the functional units described in relation to Figures 1 or 3, or the steps discussed with reference to Figure 2. Computing system includes one or more computing device(s) 402. The one or more computing device(s) 402 of computing system 400 comprise one or more processors 404 and memory 406. One or more processors 404 can be any general purpose processor(s) configured to execute a set of instructions. For example, one or more processors 404 can be one or more general-purpose processors, one or more field programmable gate array (FPGA), and/or one or more application specific integrated circuits (ASIC). In one embodiment, one or more processors 404 include one processor. Alternatively, one or more processors 404 include a plurality of processors that are operatively connected. One or more processors 404 are communicatively coupled to memory 406 via address bus 408, control bus 410, and data bus 412. Memory 406 can be a random access memory (RAM), a read only memory (ROM), a persistent storage device such as a hard drive, an erasable programmable read only memory (EPROM), and/or the like. The one or more computing device(s) 402 further comprise I/O interface 414 communicatively coupled to address bus 408, control bus 410, and data bus 412.

Memory 406 can store information that can be accessed by one or more processors 404. For instance, memory 406 (e.g., one or more non-transitory computer-readable storage mediums, memory devices) can include computer-readable instructions (not shown) that can be executed by one or more processors 404. The computer-readable instructions can be software written in any suitable programming language or can be implemented in hardware. Additionally, or alternatively, the computer-readable instructions can be executed in logically and/or virtually separate threads on one or more processors 404. For example, memory 406 can store instructions (not shown) that when executed by one or more processors 404 cause one or more processors 404 to perform operations such as any of the operations and functions for which computing system 400 is configured, as described herein. In addition, or alternatively, memory 406 can store data (not shown) that can be obtained, received, accessed, written, manipulated, created, and/or stored. In some implementations, the one or more computing device(s) 402 can obtain from and/or store data in one or more memory device(s) that are remote from the computing system 400.

Computing system 400 further comprises storage unit 416, network interface 418, input controller 420, and output controller 422. Storage unit 416, network interface 418, input controller 420, and output controller 422 are communicatively coupled to the central control unit (i.e., the memory 406, the address bus 408, the control bus 410, and the data bus 412) via I/O interface 414.

Storage unit 416 is a computer readable medium, preferably a non-transitory computer readable medium, comprising one or more programs, the one or more programs comprising instructions which when executed by the one or more processors 404 cause computing system 400 to perform the method steps of the present disclosure. Alternatively, storage unit 416 is a transitory computer readable medium. Storage unit 416 can be a persistent storage device such as a hard drive, a cloud storage device, or any other appropriate storage device.

Network interface 418 can be a Wi-Fi module, a network interface card, a Bluetooth module, and/or any other suitable wired or wireless communication device. In an embodiment, network interface 418 is configured to connect to a network such as a local area network (LAN), or a wide area network (WAN), the Internet, or an intranet.

Although the invention has been described above with reference to one or more preferred embodiments, it will be appreciated that various changes or modifications can be made without departing from the scope of the invention as defined in the appended claims. The word "comprising" can mean "including" or "consisting of" and therefore does not exclude the presence of elements or steps other than those listed in any claim or the specification as a whole. The mere fact that certain measures are recited in mutually different dependent claims does not indicate that a combination of these measures cannot be used to advantage.

### Numbered Statements

1. A system for monitoring performance of predictive models within robotic mapping systems, the system comprising:
   a prediction unit communicatively coupled to one or more sensors configured to obtain measurements of an environment, the prediction unit comprising a first predictive model operable to generate one or more features from a signal obtained from the one or more sensors;
   a mapping unit configured to construct a map of the environment based at least in part on data derived from the signal obtained from the one or more sensors and/or the one or more features obtained from the first predictive model; and
   a monitoring unit comprising one or more processors configured to:
      determine a performance value associated with the one or more features generated by the first predictive model, wherein the performance value quantifies a performance metric for the first predictive model;
      compare the performance value to a performance criterion; and
      when the performance value does not satisfy the performance criterion, cause execution of an action to adjust operation of the mapping unit.
2. The system of statement 1 wherein the performance metric is a data similarity metric.
3. The system of statement 2 wherein the one or more processors of the monitoring unit are configured to determine the performance value for the data similarity metric by calculating a distance between: (i) one or more embeddings generated based on the signal obtained from the one or more sensors, and (ii) at least one predetermined embedding.
4. The system of statement 3 wherein the at least one predetermined embedding is generated during training of the first predictive model.
5. The system of either of statements 3 or 4 wherein the distance is calculated using one of: a Euclidean distance measure, a cosine distance measure, or a dot product distance measure.
6. The system of any of statements 3 to 5 wherein the distance is weighted according to at least one training performance score related to the at least one predetermined embedding.
7. The system of any of statements 3 to 6 wherein the distance is an average distance between the one or more embeddings and a plurality of predetermined embeddings.
8. The system of any preceding statement wherein the performance metric is a confidence metric.
9. The system of any preceding statement wherein the performance metric is an operational performance metric associated with a resource usage of the system.
10. The system of statement 9 wherein the resource usage corresponds to one or more of: a graphics processing unit, GPU, usage; a central processing unit, CPU, usage; a memory usage; a bandwidth; a model throughput metric; or a frames per second, FPS, metric.
11. The system of statements 9 or 10 wherein the resource usage is a resource usage of the first predictive model.
12. The system of any preceding statement wherein the performance criterion corresponds to a threshold value.
13. The system of any preceding statement wherein the system is communicatively coupled to a robotic platform.
14. The system of statement 13 wherein the system comprises the robotic platform and the robotic platform comprises the mapping unit and the one or more sensors.
15. The system of either of statements 13 or 14 where execution of the action to adjust operation of the mapping unit causes an adjustment to a speed, a movement direction, and/or a depth of the robotic platform .
16. The system of any of statements 1 to 14 wherein execution of the action to adjust operation of the mapping unit causes the mapping unit to bypass the first predictive model such that a subsequent map of the environment is generated based on data derived from signals obtained from the one or more sensors.
17. The system of any of statements 1 to 14 wherein execution of the action to adjust operation of the mapping unit causes the mapping unit to obtain features from a second predictive model of the prediction unit such that a subsequent map of the environment is generated based at least in part on features from the second predictive model.
18. The system of any of statements 1 to 14 wherein execution of the action to adjust operation of the mapping unit causes display of an alert viewable by a user of the system.
19. The system of any of statements 1 to 14 wherein execution of the action to adjust operation of the mapping unit causes the mapping unit to regenerate the map of the environment based on the signal obtained from the one or more sensors.
20. The system of any preceding statement wherein the signal obtained from the one or more sensors include: an RGB image, an RGBD image, a SONAR image, a SONAR point cloud, a LIDAR point cloud, an inertial measurement signal, a GPS signal, or a doppler velocity log signal.
21. The system of any preceding statement wherein the first predictive model is a deep learning model.
22. The system of any proceeding statement wherein the mapping unit is configured to use a simultaneous localization and mapping algorithm to generate the map of the environment.
23. A method for adaptive operation of a mapping unit configured to construct a map of an environment based at least in part on features obtained from a predictive model, the method comprising:
   identifying, by one or more processors, one or more features generated by the predictive model;
   determining, by the one or more processors, a performance value associated with the one or more features generated by the predictive model, wherein the performance value quantifies a performance metric for the predictive model;
   comparing, by the one or more processors, the performance value to a performance criterion; and
   when the performance value does not satisfy the performance criterion, causing, by the one or more processors, execution of an action to adjust operation of the mapping unit.
24. A computer-readable medium comprising instructions which, when executed by one or more processors, cause the one or more processors to carry out the method of statement 23.
25. A robotic mapping system comprising one or more processors configured to carry out the method of statement 23.

## Claims

1. A system for monitoring performance of predictive models within robotic mapping systems, the system comprising:
a prediction unit communicatively coupled to one or more sensors configured to obtain measurements of an environment, the prediction unit comprising a first predictive model operable to generate one or more features from a signal obtained from the one or more sensors;
a mapping unit configured to construct a map of the environment based at least in part on data derived from the signal obtained from the one or more sensors and/or the one or more features obtained from the first predictive model; and
a monitoring unit comprising one or more processors configured to:
determine a performance value associated with the one or more features generated by the first predictive model, wherein the performance value quantifies a performance metric for the first predictive model;
compare the performance value to a performance criterion; and
when the performance value does not satisfy the performance criterion, cause execution of an action to adjust operation of the mapping unit.

2. The system of claim 1 wherein the performance metric is a data similarity metric.

3. The system of claim 2 wherein the one or more processors of the monitoring unit are configured to determine the performance value for the data similarity metric by calculating a distance between: (i) one or more embeddings generated based on the signal obtained from the one or more sensors, and (ii) at least one predetermined embedding.

4. The system of claim 3 wherein the at least one predetermined embedding is generated during training of the first predictive model.

5. The system of either of claims 3 or 4 wherein the distance is calculated using one of: a Euclidean distance measure, a cosine distance measure, or a dot product distance measure.

6. The system of any of claims 3 to 5 wherein the distance is weighted according to at least one training performance score related to the at least one predetermined embedding.

7. The system of any of claims 3 to 6 wherein the distance is an average distance between the one or more embeddings and a plurality of predetermined embeddings.

8. The system of any preceding claim wherein the performance metric is a confidence metric.

9. The system of any preceding claim wherein the performance metric is an operational performance metric associated with a resource usage of the system, the resource usage corresponding to one or more of: a graphics processing unit, GPU, usage; a central processing unit, CPU, usage; a memory usage; a bandwidth; a model throughput metric; or a frames per second, FPS, metric.

10. The system of any preceding claim wherein the system comprises a robotic platform comprising the mapping unit and the one or more sensors.

11. The system of any preceding claim where execution of the action to adjust operation of the mapping unit causes one or more of: an adjustment to a speed, a movement direction, and/or a depth of the robotic platform; the mapping unit to bypass the first predictive model such that a subsequent map of the environment is generated based on data derived from signals obtained from the one or more sensors; the mapping unit to obtain features from a second predictive model of the prediction unit such that a subsequent map of the environment is generated based at least in part on features from the second predictive model; display of an alert viewable by a user of the system; and/or the mapping unit to regenerate the map of the environment based on the signal obtained from the one or more sensors.

12. The system of any preceding claim wherein the signal obtained from the one or more sensors include: an RGB image, an RGBD image, a SONAR image, a SONAR point cloud, a LIDAR point cloud, an inertial measurement signal, a GPS signal, or a doppler velocity log signal.

13. A method for adaptive operation of a mapping unit configured to construct a map of an environment based at least in part on features obtained from a predictive model, the method comprising:
identifying, by one or more processors, one or more features generated by the predictive model;
determining, by the one or more processors, a performance value associated with the one or more features generated by the predictive model, wherein the performance value quantifies a performance metric for the predictive model;
comparing, by the one or more processors, the performance value to a performance criterion; and
when the performance value does not satisfy the performance criterion, causing, by the one or more processors, execution of an action to adjust operation of the mapping unit.

14. A computer-readable medium comprising instructions which, when executed by one or more processors, cause the one or more processors to carry out the method of claim 13.

15. A robotic mapping system comprising one or more processors configured to carry out the method of claim 13.
